Europäisches Patentamt

European Patent Office

Office européen des brevets

(19)

(11) Veröffentlichungsnummer : **0 062 233**
**B1**

(12) **EUROPÄISCHE PATENTSCHRIFT**

(45) Veröffentlichungstag der Patentschrift :
19.12.84

(51) Int. Cl.³ : **B 65 G 47/82, B 65 G 47/52, B 65 G 47/10**

(21) Anmeldenummer : 82102433.8

(22) Anmeldetag : 24.03.82

(54) **Kommissionier-Förderanlage mit in Transportrichtung hintereinander angeordneten Übergabestationen.**

(30) Priorität : 02.04.81 DE 3113237

(43) Veröffentlichungstag der Anmeldung :
13.10.82 Patentblatt 82/41

(45) Bekanntmachung des Hinweises auf die Patenterteilung : 19.12.84 Patentblatt 84/51

(84) Benannte Vertragsstaaten :
AT BE CH DE FR GB IT LI LU NL SE

(56) Entgegenhaltungen :
DE-A- 1 556 695
DE-A- 2 711 132
DE-B- 1 185 538
DE-U- 1 895 576
FR-A- 2 387 879
US-A- 1 939 891
US-A- 3 902 587

(73) Patentinhaber : Ferd. Schulze & Co.
Pfingstweidstrasse 10-12
D-6800 Mannheim 24 (DE)

(72) Erfinder : Weber, Otto
Kurpfalzstrasse 21
D-6945 Hirschberg (DE)
Erfinder : Ohnsmann, Klaus
Leharstrasse 32
D-6040 Weinheim (DE)
Erfinder : Christ, Ferdinand
Lindenstrasse 9
D-6761 Welterweiler (DE)

(74) Vertreter : Gudel, Diether, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz Grosse Eschenheimer Strasse 39
D-6000 Frankfurt am Main 1 (DE)

## Beschreibung

Die Erfindung betrifft eine Kommissionier-Förderanlage mit rechnergesteuerter Zielsteuerung mit einem Förderband mit in Transportrichtung hintereinander angeordneten Übergabestationen, an denen auf dem Förderband transportierte Gegenstände von einem Lesegerät identifiziert und ggfs. auf eine zum Förderband parallele Rollenbahn übergeben werden.

Eine solche Förderanlage beschreibt die DE-OS 2 711 132. Dort ist an jeder Übergabestation ein Schieber vorgesehen, der bestimmte Gegenstände vom Förderband auf die parallel dazu laufende Rollenbahn überschiebt, sobald er einen entsprechenden Impuls hierzu erhält. Hierfür wird jeder Behälter bzw. Gegenstand vom Lesegerät der betreffenden Übergabestation identifiziert und über den Rechner wird ggfs. der entsprechende Impuls an den Schieber gegeben.

Der dann auf die Rollenbahn vom Schieber geschobene Behälter wird dort über einen weiteren Schieber in Förderrichtung der Förderbahn über eine gewisse Speicherstrecke zum Übergabeplatz transportiert, wo der betreffende Behälter auftragsgebunden mit denjenigen Artikeln gefüllt wird, die im Bereich dieses Übergabeplatzes lagern.

Diese vorbekannte Kommissionier-Förderanlage ist aber insoweit nachteilig, als der apparative Aufwand für jeden Förderplatz recht hoch ist. Auch muß vor jeder Übergabestation eine gewisse Speicherkapazität vorgesehen sein, damit nämlich der Schieber den betreffenden Behälter auf die Rollenbahn schieben kann, ohne daß er bei seiner Rückführung in die Ausgangslage an den jeweils nachfolgenden Behälter anstößt, oder es muß dafür gesorgt werden, daß der jeweils nächste Behälter einen ausreichenden Abstand auf dem Förderband von seinem vorhergehenden Behälter einhält, damit der Schieber ungestört wieder in seine Ausgangslage zurückgeführt werden kann.

Die FR-PS 2 387 879 beschreibt eine Förderanlage für Koffer und ähnliche Gegenstände mit zwei zueinander parallel geführten Rollenbahnen, wobei die Gegenstände über einen Kettenförderer mit Mitnehmern wahlweise gesteuert von der einen Rollenbahn zur anderen oder auch in umgekehrter Richtung gefördert werden können.

Die US-PS 3 902 587 beschreibt einen angetriebenen Kettenförderer mit Mitnehmern, mit dessen Hilfe Gegenstände von einem ersten Förderband zu einem zweiten Förderband transportiert werden können, wobei der Kettenförderer in einer Lücke zwischen den beiden Förderbändern angeordnet ist.

Der Erfindung liegt die Aufgabe zugrunde, eine Kommissionier-Förderanlage mit den eingangs genannten Merkmalen vorzuschlagen, bei der die Anzahl der notwenigen Übergabestationen mit zugehöriger Steuerung fühlbar verringert ist.

Zur Lösung dieser Aufgabe ist die Erfindung dadurch gekennzeichnet, daß die Rollenbahn an jeder Übergabestation einen in ihren beiden Transportrichtungen antreibbaren Kettenförderer mit über die Ebene der Rollen überstehenden Mitnehmern hat wobei der Abstand der Mitnehmer größer ist als die maximale Länge der Behälter, gemessen in Transportrichtung der Rollenbahn.

Durch diese einfachen Maßnahmen ist es jetzt möglich, je nach dem Antrieb des Kettenförderers, die vom Förderband auf die Rollenbahn übergebenen Behälter oder sonstigen Gegenstände entweder nach rechts oder links, d. h. entweder in Förderrichtung des Förderbandes oder in der Gegenrichtung dazu, zu transportieren. Eine einzige Übergabestation bedient somit die doppelte Länge, so daß z. B. für ein vorgegebenes Regal etwa nur noch die Hälfte an Übergabestationen notwendig wird. Dies fällt sehr stark ins Gewicht, weil nämlich jede Übergabestation einen sehr hohen Wert darstellt, insbesondere bedingt durch die logische Steuerung für die Übergabe der Gegenstände vom Förderband auf die Rollenbahn und für den Transport der übergebenen Gegenstände auf der Rollenbahn.

Es läßt sich mit der Erfindung auch eine sehr hohe Transportgeschwindigkeit der übergebenen Gegenstände erzielen, weil die Gegenstände jeweils zwischen ein Paar der einander zugehörigen Mitnehmer des Kettenförderers gebracht werden und dann bei Antrieb des Kettenförderers in der einen oder anderen Richtung sofort auf den rechts oder links benachbarten Teil der Rollenbahn gefördert werden. Unmittelbar nach der Weitergabe eines Gegenstandes auf den anschließenden Teil der Rollenbahn ist der Kettenförderer für den Transport des nachfolgenden Gegenstandes wieder bereit, weil der Kettenförderer ringsum mit derartigen Mitnehmern versehen ist. Der Kettenförderer braucht also nicht in seine Ausgangslage wieder zurückbewegt zu werden.

Es wird bevorzugt, wenn das Förderband an jeder Übergabestation unterbrochen ist und in die Lücke ein Rollenbahnabschnitt mit angetriebenen Rollen eingesetzt ist, welche als Übergabeeinheit einen weiteren, angetriebenen Kettenförderer mit Mitnehmern hat, die ebenfalls über die Ebene des Rollenbahnabschnitts vorstehen und deren Abstand voneinander etwas größer ist als die Länge der Behälter, gemessen in Transportrichtung des Rollenbahnabschnitts.

Durch diese Maßnahmen wird die erwähnte Pufferstrecke vor jeder Übergabestation am Förderband beim Stand der Technik entbehrlich, weil der auf die Rollenbahn zu übergebende Behälter zwischen einem Paar Mitnehmern gegriffen und sofort auf die benachbarte Rollenbahn transportiert werden kann. Auch hierbei braucht der Kettenförderer nicht anschließend in seine Ausgangslage zurückbewegt zu werden, weil nach dem Transport eines Behälters sofort das anschließende Mitnehmerpaar zum Transport des nächsten Behälters bereitsteht. Soll ein bestimmter Behälter nicht übergeben werden, so werden nur die Rollen der Übergabestation des Förderbandes angetrieben und der Kettenförderer bleibt stehen und läßt zwischen seinen Mitnehmern den oder die betreffenden Behälter passieren. Es sind also entweder die Rollen des Rollenbahnabschnitts oder der weitere Kettenförderer angetrieben.

Um ein Verkanten der Behälter bei der Übergabe und beim Weitertransport zu verhindern, wird es bevorzugt, wenn alle Kettenförderer als parallele Kettenpaare ausgebildet sind.

Die Erfindung wird im folgenden anhand eines Ausführungsbeispieles näher erläutert, aus dem sich weitere wichtige Merkmale ergeben. Es zeigt :

Figur 1 schematisch eine Draufsicht auf eine Übergabestation einer neuartigen Förderanlage ;

Figur 2 vergrößert eine Draufsicht auf die wesentlichen Bauelemente von Fig. 1.

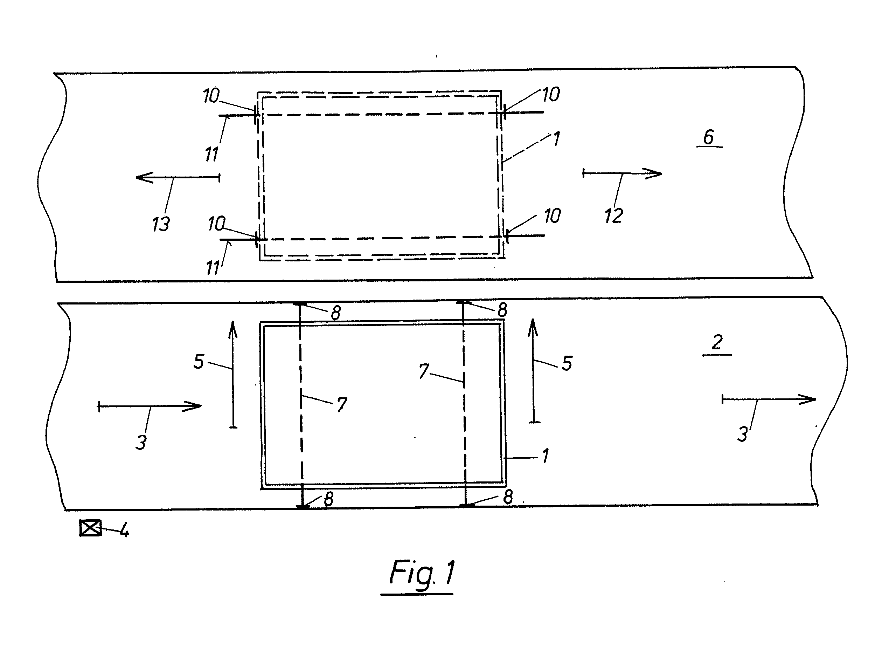

Die zu kommissionierenden Artikel werden auftragsgebunden in Behältern 1 gesammelt. Hierzu werden sie auf einem Förderband 2 in Richtung des Pfeiles 3 an Regalen vorbeigeführt. In bestimmten Abständen in Förderrichtung hintereinander sind an dem Förderband Übergabestationen vorgesehen. Fig. 1 zeigt eine derartige Übergabestation.

Vor jeder Übergabestation befindet sich ein Lesegerät 4, das an einer Seitenwand der rechteckigen Behälter 1 angebrachte Markierungen liest. Sollen in den betreffenden Behälter Artikel eingegeben werden, die in den Regalen im Bereich dieser Übergabestation gelagert sind, so erhält ein Übergabesystem einen Impuls und transportiert den betreffenden Behälter dann in Richtung der Pfeile 5 auf eine parallel zum Förderband 2 verlaufende Rollenbahn 6.

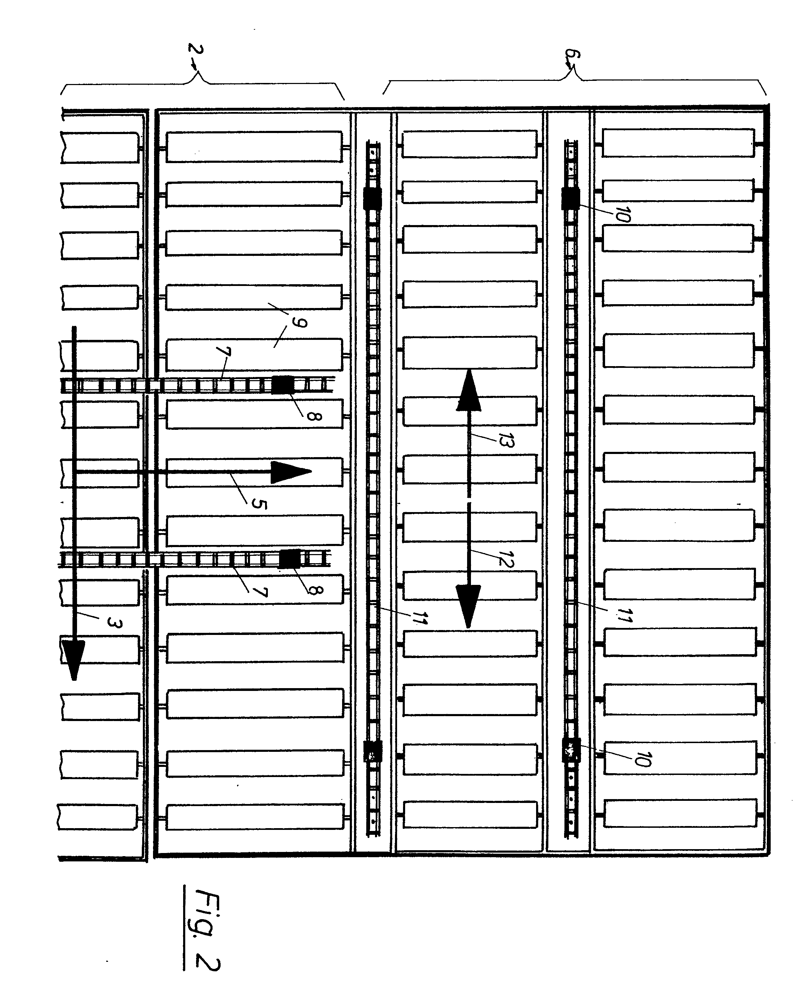

Das Übergabesystem zur Übergabe der Behälter vom Förderband 2 auf die Rollenbahn 6 ist als Kettenförderer mit zwei zueinander parallel, angetriebenen, endlosen Ketten 7 ausgebildet. An den Ketten sind in vorbestimmten Abständen voneinander gummielastische Mitnehmer 8 angebracht, die über die Ebene von Rollen 9 vorstehen, die im Bereich dieser Übergabestation das Förderband 2 ausbilden. Die Rollen sind angetrieben. Vergleiche auch Figur 2. Die Mitnehmer 8 sind über den Umfang der Ketten 7 so verteilt, daß der Abstand zwischen den Mitnehmern stets etwas größer ist als die Breite des Behälters 1 gemessen in Richtung des Pfeiles 5. Beispielsweise sind also vier solche Mitnehmer in gleichmäßigen Abständen voneinander an jeder Kette befestigt.

Der Behälter 1 wird hierdurch also auf die benachbarte Rollenbahn 6 übergeben, wo er ebenfalls zwischen Mitnehmer 10 von Ketten 11 eines zweiten Kettenförderers gelangt. Der Abstand dieser Mitnehmer 10 voneinander ist etwas größer als die Länge der Behälter 1. Die Ketten des Kettenförderers können wahlweise in Richtung des Pfeiles 12, das heißt in Transportrichtung des Förderbandes 2, oder in der Gegenrichtung, das heißt in Richtung des Pfeiles 13, angetrieben werden. Damit ist der wesentliche Vorteil verbunden, daß eine einzige Übergabestation den Platz beidseits der Station bedienen kann.

Einzelheiten des konstruktiven Aufbaus einer solchen Übergabestation zeigt Figur 2, wobei dieselben Bezugsziffern dieselben Bauteile kennzeichnen. Es ist daraus auch ersichtlich, daß die Ketten 7 des Förderbandes 2 bis dicht an die Ketten 11 der benachbarten Rollenbahn geführt sind, so daß die Behälter sicher auf die Rollenbahn und zwischen die Mitnehmer 10 dieses Kettenförderers geschoben werden. Die Rollen der Rollenbahn 6 sind im Bereich des Kettenförderers mit den Ketten 11 in ihrer Längsrichtung unterteilt, wie Figur 2 zeigt.

Die Erfindung ist nicht, wie vorstehend beschrieben, auf die Kommissionierung von Artikeln in oben offene Behälter beschränkt. Vielmehr können beliebige Gegenstände mit der neuartigen Förderanlage transportiert werden, wobei stets der Vorteil beibehalten bleibt, daß an jeder Übergabestation der dort vorhandene Kettenförderer in beide Richtungen fördern kann.

Wenn einander im Grundriß gleichgroße Gegenstände gefördert werden, so ist der Abstand der über die Ebene der Rollenbahnen vorstehenden Mitnehmer der Kettenförderer so gewählt, daß dieser Abstand etwas größer ist als die betreffende Dimension des betreffenden Gegenstandes. Dies bringt den Vorteil mit sich, daß die Übergabe sehr schnell erfolgen kann, weil nämlich der betreffende Gegenstand an seiner Vorderkante und Hinterkante durch die dort vorhandenen gummielastischen Mitnehmer beim Anfahren und Anhalten nach Art eines Puffers gebremst wird.

Zu demselben Zweck kann die Transportgeschwindigkeit der Kettenförderer einstellbar sein, beispielsweise über ein entsprechendes Getriebe oder über Antriebsmotoren mit einstellbarer Geschwindigkeit. Dies gilt insbesondere für den Antrieb des Kettenförderers 11, der dann so gesteuert wird, daß er am Ende des Transports eines Behälters 1 verlangsamt, so daß dieser Behälter sachte gegen die vor ihm auf der Rollenbahn 6 befindlichen Behälter gefördert wird. Hierdurch wird auch erreicht, daß die Fördergeschwindigkeit der Kettenförderer derjenigen des Förderbandes optimal angepaßt werden kann, wobei sich insbesondere vorteilhaft auswirkt, daß keine Schieber an den Übergabestationen mehr verwendet werden, deren Zurückführung in die Ausgangslage einen zeitlichen Leerlauf bedingen würde.

**Ansprüche**

1. Kommissionier-Förderanlage mit rechnergesteuerter Zielsteuerung mit einem Förderband (2) mit in Transportrichtung hintereinander angeordneten Übergabestationen, an denen auf dem Förderband (2) transportierte Gegenstände (1) von einem Lesegerät (4) identifiziert und ggfs. auf eine zum Förderband (2) parallele Rollenbahn (6) übergeben werden, dadurch gekennzeichnet, daß die Rollenbahn (6) an jeder Übergabestation einen in ihren beiden Transportrichtungen antreibbaren Kettenförderer (11) mit über die Ebene der Rollen überstehenden Mitnehmern (10) hat, wobei der Abstand der Mitnehmer (10) größer ist als die maximale Länge der Behälter (1), gemessen in Transportrichtung (12, 13) der Rollenbahn (6).

2. Kommissionier-Förderanlage nach Anspruch 1, dadurch gekennzeichnet, daß das Förderband (2) an jeder Übergabestation unterbrochen ist und in die Lücke ein Rollenbahnabschnitt mit angetriebenen Rollen (9) eingesetzt ist, welche als Übergabeinheit einen weiteren, angetriebenen Kettenförderer (7) mit Mitnehmern (8) hat, die ebenfalls über die Ebene des Rollenbahnabschnitts vorstehen und deren Abstand voneinander etwas größer ist als die Länge der Behälter (1), gemessen in Transportrichtung des Rollenbahnabschnitts.

## Claims

1. Consignment conveying equipment with computerised directional control, with a conveyor belt (2) with transfer stations, arranged one after the other in the conveying direction, at which articles (1) transported on the conveyor belt (2) are identified by a reading device (4) and if appropriate transferred to a roller conveyor (6) running parallel to the conveyor belt (2), characterised in that the roller conveyor (6) has at each transfer station a chain conveyor (11), which can be driven in both its conveying directions, with carriers (10) projecting above the level of the rollers, the spacing of the carriers (10) being greater than the maximum length of the container (1), measured in the conveying direction (12, 13) of the roller conveyor (6).

2. Consignment conveying equipment according to Claim 1, characterised in that the conveyor belt (2) is interrupted at each transfer station and a roller conveyor section with driven rollers (9) is inserted in the gap, the roller conveyor section having, as a transfer unit, an additional, driven chain conveyor (7) with carriers (8), which likewise project above the level of the roller conveyor section and whose spacing is slightly greater than the length of the container (1) measured in the conveying direction of the roller conveyor section.

## Revendications

1. Convoyeur de marchandises pour l'expédition à commande de destination commandée par calculateur, comportant une bande transporteuse (2) pourvue de stations de transfert placées les unes derrière les autres dans la direction de transport où les objets (1) transportés sur la bande transporteuse (2) sont identifiés par un lecteur (4) et éventuellement transférés à un chemin à rouleaux (6) parallèle à la bande transporteuse (2), caractérisé en ce que le chemin à rouleaux (6) comporte à chaque station de transfert un transporteur à chaînes (11) qui peut être mû dans les deux sens de transport du chemin et est pourvu d'entraîneurs (10) qui saillent au-dessus du plan des rouleaux, l'intervalle entre ces entraîneurs (10) étant plus grand que la longueur maximale des récipients (1) mesurée dans la direction de transport (12, 13) du chemin à rouleaux (6).

2. Convoyeur de marchandises pour l'expédition selon la revendication 1, caractérisé en ce que la bande transporteuse (2) est interrompue à chaque station de transfert et dans le créneau est placé un tronçon de chemin à rouleaux, avec des rouleaux (9) entraînés, qui comporte comme organe de transfert un autre transporteur à chaînes entraîné (7) pourvu d'entraîneurs (8) qui saillent eux aussi au-dessus du plan du tronçon de chemin à rouleaux et dont l'intervalle est un peu plus grand que la longueur des récipients (1) mesurée dans la direction de transport du tronçon de chemin à rouleaux.

Fig.1

Fig. 2